# EUROPÄISCHE PATENTANMELDUNG

(11) **EP 4 455 235 A1**
(43) Veröffentlichungstag der Anmeldung: **30.10.2024**
(21) Anmeldenummer: 23169917.4
(22) Anmeldetag: 25.04.2023
(51) Int. Cl.: C09J 5/00, C08K 5/3445, C09J 7/30

(54) **KLEBEBAND, VERFAHREN ZUR HERSTELLUNG DES KLEBEBANDES, VERKLEBTER VERBUND UND VERFAHREN ZUM ELEKTRISCHEN LÖSEN DES VERKLEBTEN VERBUNDES**

(71) Anmelder: tesa SE, 22848 Norderstedt (DE)
(72) Erfinder: KRAWINKEL, Thorsten, 22848 Norderstedt (DE); WANG, Shuang, 22848 Norderstedt (DE)
(74) Vertreter: tesa SE

(57) **Zusammenfassung**

Die Erfindung betrifft ein Klebeband, ein Verfahren zur Herstellung des Klebebandes, einen verklebten Verbund, ein Verfahren zum elektrischen Lösen des verklebten Verbundes und die Verwendung des Klebebands zur Verklebung von Bauteilen in elektronischen Geräten, Automobilen, medizinischen Geräten und zahnmedizinischen Geräten.

Das Klebeband umfasst wenigstens folgende Schichten:
• Eine erste Klebemasseschicht D, wobei die Klebemasseschicht D wenigstens ein Elektrolyt enthält; und
• Eine zweite Klebemasseschicht C, wobei die Klebemasseschicht C elektrisch leitfähig ist; und
• Eine elektrisch leitfähige Trägerschicht T, die zwischen der ersten Klebemasseschicht D und der zweiten Klebemasseschicht C angeordnet ist; und
• Wobei die Schichten D, T und C bevorzugt so übereinander angeordnet sind, dass keine der Schichten eine der anderen Schichten seitlich überragt.

## Beschreibung

Die Erfindung betrifft ein Klebeband, ein Verfahren zur Herstellung des Klebebandes, einen verklebten Verbund, ein Verfahren zum elektrischen Lösen des verklebten Verbundes und die Verwendung des Klebebands zur Verklebung von Bauteilen in elektronischen Geräten, Automobilen, medizinischen Geräten und zahnmedizinischen Geräten.

Die meisten Klebebandlösungen sind nicht oder nicht ohne Beschädigung der Substrate ablösbar. Neuerdings besteht ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert.

Die Debonding-Technologien zielen darauf, ein kohäsives Spalten der Klebstoffschicht oder ein adhäsives Ablösen der Klebstoffschicht vom Substrat zu erzielen. Während ersteres eine Reinigung des Substrats vor einer Wiederverklebung erfordert, kommt letzteres ohne eine solche aus.

Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels.

So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

Neben wärmevermittelten Trennverfahren werden elektrische Trennverfahren diskutiert. So offenbart beispielsweise die EP 3363873 B1 ein solches elektrisches Trennverfahren bzw. ein entsprechendes doppelseitiges Klebeband, welches eine elektrische Trennung von miteinander verklebten Substraten ermöglicht. Hierdurch soll insbesondere die Trennung von rigiden Substraten ermöglicht werden. Das in der EP 3363873 B1 vorgeschlagene Klebeband weist hierzu eine mittig angeordnete elektrisch leitfähige Schicht umgeben von zwei Klebemasseschichten auf, von denen eine Klebeschicht ein Elektrolyt enthält und hierdurch elektrisch von der leitfähigen Schicht oder einem elektrisch leitfähigen Substrat gelöst werden kann. Die adhäsive Trennung der Klebemasseschicht von der mittig angeordneten elektrisch leitfähigen Schicht hat jedoch den Nachteil, dass die Trennung hierdurch innerhalb des Klebebandes stattfindet und somit an beiden Substraten Rückstände des Klebebandes verbleiben. Ferner ist bei dem in der EP 3363873 B1 vorgeschlagenen Klebeband ein Verlängerungsabschnitt der mittig angeordneten elektrisch leitfähigen Schicht vorgesehen, welcher es ermöglicht, eine Spannung an diese Schicht anzulegen. Ein derartiger Verlängerungsabschnitt hat jedoch den Nachteil, dass das Klebeband aufgrund der uneinheitlichen Dimensionen von leitfähiger Schicht und den Klebemasseschichten vergleichsweise aufwändig herzustellen ist. Die Schichten müssen nämlich separat voneinander gestanzt und können erst im Anschluss zusammengefügt werden, um ein Klebeband mit den entsprechenden Maßen zu erhalten.

Der vorliegenden Erfindung liegt daher die Aufgabe zugrunde ausgehend vom Stand der Technik ein Klebeband und ein Verfahren zur Herstellung des Klebebandes bereitzustellen, wobei sich das Klebeband von wenigstens einem Substrat ohne Rückstände wieder ablösen lassen soll und einfacher herstellbar sein soll. Gleichzeitig soll die Klebkraft des Klebebandes an die zu verklebenden Substrate vor dem Lösen nicht negativ beeinträchtigt sein.

Die Aufgabe wird erfindungsgemäß durch das Klebeband gemäß Anspruch 1 sowie das Verfahren zur Herstellung des Klebebandes gemäß Anspruch 12 gelöst.

Das erfindungsgemäße Klebeband umfasst wenigstens folgende Schichten:
- Eine erste Klebemasseschicht D, wobei die Klebemasseschicht D wenigstens ein Elektrolyt enthält; und
- Eine zweite Klebemasseschicht C, wobei die Klebemasseschicht C elektrisch leitfähig ist; und
- Eine elektrisch leitfähige Trägerschicht T, die zwischen der ersten Klebemasseschicht D und der zweiten Klebemasseschicht C angeordnet ist; und
wobei die Schichten T, C und D bevorzugt so übereinander angeordnet sind, dass keine der Schichten eine der anderen Schichten seitlich überragt.

Das erfindungsgemäße Klebeband ist ein doppelseitiges Klebeband. Der Einfachheit halber wird das erfindungsgemäße doppelseitige Klebeband im Rahmen der vorliegenden Erfindung auch als "Klebeband" bezeichnet.

Dadurch, dass das Klebeband die erste Klebemasseschicht enthaltend wenigstens einen Elektrolyten umfasst, ist es elektrisch wieder ablösbar.

Dadurch, dass die zweite Klebemasseschicht C und die Trägerschicht T elektrisch leitfähig sind, ist es möglich, eine Spannung an die zweite Klebemasseschicht C und an ein an die erste Klebemasseschicht D gebundenes elektrisch leitfähiges Substrat anzulegen, um das Klebeband über die erste Klebemasseschicht D von dem Substrat zu lösen.

Durch die Kombination der ablösbaren Klebemasseschicht D und den leitfähigen Schichten T und C ist es somit möglich, das Klebeband adhäsiv von wenigstens einem Substrat abzulösen. Dies hat den Vorteil, dass keine Rückstände des Klebebandes an ebendiesem Substrat verbleiben.

Bevorzugt sind die Schichten D, T und C so übereinander angeordnet, dass keine der Schichten eine der anderen Schichten seitlich überragt. Hierdurch ist das Klebeband vergleichsweise einfach herstellbar. Die Schichten T, C und D können nämlich erfindungsgemäß aufeinander angeordnet werden und anschließend der Schichtverbund gemeinsam bzw. das Klebeband gestanzt oder auf andere Weise in die gewünschte Form gebracht werden. Hierdurch kann auch die Adhäsion der Schichten D, T und C leichter aneinander optimal eingestellt werden, sodass dies nicht zu einem späteren Zeitpunkt erfolgen muss.

So umfasst das erfindungsgemäße Verfahren zur Herstellung des erfindungsgemäßen Klebebandes wenigstens folgende Verfahrensschritte:
a) Bereitstellung einer ersten Klebemasseschicht D, wobei die Klebemasseschicht D wenigstens ein Elektrolyt enthält; und
b) Bereitstellung einer elektrisch leitfähigen Trägerschicht T; und
c) Bereitstellung einer zweiten Klebemasseschicht C, wobei die Klebemasseschicht C elektrisch leitfähig ist,
d) Anordnung der Schichten D, T und C, wodurch ein Schichtverbund DTC als doppelseitiges Klebeband erhalten wird;
e) Optional Formen, insbesondere Stanzen oder Schneiden, des Schichtverbundes DTC.

Das Formen, insbesondere Stanzen oder Schneiden, in Schritt e) ist optional, da die Schichten D, T und C gemäß bevorzugter Ausführungsformen der Erfindung bereits in den gewünschten einheitlichen Maßen bereitgestellt werden, sodass sich dann ein zusätzliches Stanzen oder Schneiden erübrigt.

Für zahlreiche industrielle Anwendungen wird das Klebeband gemäß weiterer bevorzugter Ausführungsformen jedoch in einer Weise hergestellt, die eine ökonomische Lagerung und Verwendung ermöglichen, insbesondere in Form von Rollen. Hierbei ist dann ein individuelles Anpassen an die jeweiligen Dimensionen erforderlich, insbesondere für die Verwendung des Klebebandes zur Verklebung von Bauteilen in elektronischen Geräten, Automobilen, medizinischen Geräten und zahnmedizinischen Geräten.

Beim "Schneiden" kommen bevorzugt Laser zur Anwendung.

Weitere Einzelheiten der Schritte a) bis e) werden unten weiter ausgeführt.

Ein weiterer Gegenstand der vorliegenden Erfindung ist ein verklebter Verbund umfassend wenigstens folgende Schichten:
- Ein erstes Substrat A, wobei das Substrat A elektrisch leitfähig ist; und
- Eine erste Klebemasseschicht D, die wenigstens auf einer der Flächen des Substrates A angeordnet ist, wobei die Klebemasseschicht D wenigstens ein Elektrolyt enthält; und
- Eine elektrisch leitfähige Trägerschicht T, die auf der dem Substrat A gegenüberliegenden Fläche der ersten Klebemasseschicht D angeordnet ist; und
- Eine zweite Klebemasseschicht C, wobei die Klebemasseschicht C elektrisch leitfähig ist und auf der der ersten Klebemasseschicht D gegenüberliegenden Fläche der Trägerschicht T angeordnet ist; und
- Ein zweites Substrat B, welches auf der der Trägerschicht T gegenüberliegenden Fläche der zweiten Klebemasseschicht C angeordnet ist,
- Wobei die zweite Klebemasseschicht C das Substrat B in wenigstens einer Erstreckungsrichtung der Schichtebene seitlich überragt, und
wobei die Schichten D, T und C bevorzugt so übereinander angeordnet sind, dass keine der Schichten D, T und C eine der anderen Schichten D, T und C seitlich überragt.

Der erfindungsgemäße verklebte Verbund weist somit das erfindungsgemäße Klebeband und hierüber miteinander verklebte Substrate A und B auf.

Dadurch, dass die zweite Klebemasseschicht C das Substrat B in wenigstens einer Erstreckungsrichtung der Schichtebene seitlich überragt und somit eine freie Fläche bzw. einen freien Flächenabschnitt aufweist, kann an diese zweite Klebemasseschicht C eine Spannung angelegt werden, ohne dass hierzu ein Verlängerungsabschnitt der Schicht C, der über die Schichten T und D hinausgeht, erforderlich ist. Entsprechend ist im erfindungsgemäßen Klebeband und dem verklebten Verbund bevorzugt, dass keine der Schichten D, T und C eine der anderen Schichten D, T und C seitlich überragt.

Das erste Substrat A ist erfindungsgemäß elektrisch leitfähig, sodass hier eine Spannung angelegt werden kann.

Das zweite Substrat B muss nicht elektrisch leitfähig sein.

Durch das erfindungsgemäße Klebeband können somit Substrate miteinander verklebt und elektrisch wieder voneinander gelöst werden, ohne, dass beide Substrate elektrisch leitfähig sein müssen.

Das elektrisch leitfähige Substrat A kann beispielsweise ein Gehäuse von einem Mobiltelefon sein.

Bei dem Substrat B kann es sich insbesondere um eine Batterie oder andere nicht elektrisch leitfähig ausgestaltete Bauteile handeln, wie beispielsweise Lautsprecher.

Ein weiterer Gegenstand der vorliegenden Erfindung ist ein Verfahren zum elektrischen Lösen des erfindungsgemäßen Verbundes.

Das Verfahren umfasst wenigstens folgende Verfahrensschritte:
i.) Anlegen einer Spannung zwischen dem leitfähigen Substrat A und der zweiten Klebemasseschicht C, wobei die Spannung bevorzugt 2 bis 20 V, besonders bevorzugt 3 bis 15 V, beträgt.

Das Anlegen der Spannung erfolgt gemäß Schritt i.) des erfindungsgemäßen Verfahrens zum elektrischen Lösen des Verbundes.

Bei der Spannung handelt es sich insbesondere um eine Gleichspannung.

Die zeitliche Dauer des Anlegens der Spannung in Schritt i.) kann dabei von wenigen Sekunden, insbesondere 2 Sekunden, bis zu 300 Sekunden, bevorzugt bis zu 120 Sekunden, betragen.

Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A stark herabgesetzt und es erfolgt ein Lösen dieser Schichten voneinander.

Sofern sich die Schichten nach Anlegen der Spannung nicht ohne weitere Einwirkung voneinander lösen, umfasst das erfindungsgemäße Verfahren wenigstens den weiteren Verfahrensschritt:
ii.) Krafteinwirkung auf die Klebemasseschicht D und/oder das Substrat A, sodass der Abstand zwischen A und D vergrößert wird.

Durch das erfindungsgemäße Verfahren zum elektrischen Lösen des erfindungsgemäßen Verbundes lässt sich das Klebeband auf einfache Weise vom Substrat A lösen, ohne dass Rückstände des Klebebandes an der Oberfläche des Substrates A verbleiben.

Ein weiterer Gegenstand der vorliegenden Erfindung ist die Verwendung des erfindungsgemäßen Klebebands zur Verklebung von Bauteilen in elektronischen Geräten, Automobilen, medizinischen Geräten und zahnmedizinischen Geräten. Bei der erfindungsgemäßen Verwendung wird insbesondere ein erfindungsgemäßer Verbund erzeugt, bei dem die zweite Klebemasseschicht C das Substrat B in wenigstens einer Erstreckungsrichtung der Schichtebene seitlich überragt.

Die vorliegende Erfindung betrifft ein Klebeband, welches in beliebigen Konfektionsformen vorliegen kann, wobei Klebebandrollen bevorzugt sind. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Stanzlingen erhalten wird.

Das erfindungsgemäße Klebeband liegt insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise exakt gleich.

Die Ausführungen gelten analog für den Träger, der als integraler Bestandteil des Klebebandes eine Schicht in x- und y-Richtung ausbildet.

Es versteht sich, dass die einzelnen Schichten entlang der z-Richtung aufeinander angeordnet sind.

Unter dem Ausdruck "seitlich überragen" ist im Rahmen der vorliegenden Erfindung jegliche Art von seitlichem Überstand der angesprochenen Schicht oder Schichten gemeint und bedeutet, dass sich die jeweils angesprochene Schicht insbesondere in der "xy"-Ebene und somit seitlich - senkrecht zur Stapelrichtung - weiter erstreckt als die Bezugsschicht. Anstelle des Begriffes "seitlicher Überstand" werden im Rahmen der vorliegenden Erfindung auch die Begriffe "seitliche Verlängerung" oder "seitlicher Verlängerungsabschnitt" verwendet.

Der Begriff "seitlich" ist hier auf jede Erstreckungsrichtung der Schichtebene "xy" senkrecht zur Stapelrichtung der Schichten "z" bezogen. Der Begriff ist damit insbesondere unabhängig von der geometrischen Form des Klebebandes in der "xy"-Ebene, welche zum Beispiel ein Rechteck, wie für Klebebänder üblich (s. oben), aber auch ein Quadrat oder ein Kreis sein kann.

Geringfügige Schwankungen der Maße der einzelnen Schichten in der "xy"-Ebene, die sich aufgrund des Stanzverfahrens oder ähnlichen formgebenden Verfahren ergeben, sind hiermit nicht angesprochen, insbesondere da solche geringfügigen Materialüberstände aufgrund der Dimensionen nicht dazu geeignet sind, planmäßig eine Spannung daran anzulegen und diese keinen Zusatzaufwand in der Herstellung bedeuten, also nicht durch einen zusätzlichen Verfahrensschritt herbeigeführt werden.

Sämtliche Ausführungen der Beschreibung gelten für das erfindungsgemäße Klebeband, das erfindungsgemäße Verfahren zur Herstellung des Klebebandes, den erfindungsgemäßen verklebten Verbund sowie das Verfahren zum elektrischen Lösen des Verbundes und die Verwendung des erfindungsgemäßen Klebebandes.

Von der Erfindung sind zudem sämtliche Merkmale, die Gegenstände von jeglichen abhängigen Patentansprüchen sind, umfasst. Ferner sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst.

Im Folgenden werden die einzelnen Schichten D, T und C weiter ausgeführt.

Die Klebemasseschicht D enthält wenigstens ein Elektrolyt.

Unter einem "Elektrolyt" wird vorliegend eine chemische Verbindung verstanden, "die im festen, flüssigen oder gelösten Zustand in Ionen dissoziiert ist und die sich unter dem Einfluss eines elektrischen Feldes gerichtet bewegt", wie unter dem Wikipedia-Eintrag "Elektrolyt" vom 04.01.2023 bzw. entsprechend in Carl H. Hamann, Wolf Vielstich: Elektrochemie I: Elektrolytische Leitfähigkeit, Potentiale, Phasengrenzen. 2. Auflage. VCH Verlagsgesellschaft mbH, Oldenburg/ Bonn 1985, ISBN 3-527-21100-4, S. 4., aufgeführt.

Bevorzugt ist der Elektrolyt der Klebemasseschicht D ausgewählt aus der Gruppe bestehend aus ionischen Flüssigkeiten und Metallsalzen, wobei ionische Flüssigkeiten besonders bevorzugt sind.

Insbesondere durch eine oder mehrere ionische Flüssigkeiten als Elektrolyt lässt sich das Klebeband auf einfache Weise wieder ablösen ohne dass die Klebeigenschaften des Klebebandes negativ beeinträchtigt sind. Ionische Flüssigkeiten haben dabei den Vorteil, dass sie sich gut und homogen in der Polymermatrix von Klebemassen verteilen lassen und das Wiederablösen schneller funktioniert als mit anderen Elektrolyten.

Ferner sind die Bestandteile von ionischen Flüssigkeiten, insbesondere bei Raumtemperatur, nicht flüchtig. Ionische Flüssigkeiten sind zudem vergleichsweise hitzestabil und nicht brennbar sowie chemisch vergleichsweise stabil.

Ionische Flüssigkeiten sind im Rahmen der vorliegenden Erfindung Salze, die bei Raumtemperatur, also 23 °C, flüssig sind. Ionische Flüssigkeiten enthalten dementsprechend Anionen und Kationen.

Ionische Flüssigkeiten sind daher als Elektrolyt im Rahmen des erfindungsgemäßen Trennverfahrens bzw. Verfahrens zum elektrischen Lösen besonders gut geeignet.

Wenn eine Spannung angelegt wird, wandern die Anionen zur anodischen Seite und die Kationen zur kathodischen Seite. Hierdurch kommt es zu einer Absenkung der Klebkraft der die ionische Flüssigkeit enthaltenden Klebemasseschicht, hier Schicht D, vom Substrat, vorliegend insbesondere Substrat A, wodurch eine adhäsive Spaltung zwischen der Klebemasseschicht D und dem Substrat A erzielt wird.

Im Rahmen der vorliegenden Erfindung sind prinzipiell alle ionischen Flüssigkeiten geeignet.

Die im Rahmen der vorliegenden Erfindung verwendeten ionischen Flüssigkeiten enthalten wenigstens ein Anion und wenigstens ein Kation. Hierbei ist es auch denkbar, dass die ionische Flüssigkeit zwei oder mehr Typen an Anionen und/oder zwei oder mehr Typen an Kationen umfasst. Ferner ist es denkbar, dass der Klebemasseschicht D zwei oder mehrere verschiedene ionische Flüssigkeiten zugegeben werden bzw. die Klebemasseschicht D dann zwei oder mehrere verschiedene ionische Flüssigkeiten enthält.

Bevorzugt ist das Anion der ionischen Flüssigkeit ausgewählt aus der Gruppe bestehend aus Br-, AlCl₄⁻, Al₂Cl₇⁻, NO₃⁻, BF₄⁻, PF₆⁻, CH₃COO⁻, CF₃COO⁻, CF₃CO₃⁻, CF₃SO₃⁻, (CF₃SO₂)₂N⁻, (CF₃SO₂)₃C⁻, AsF₆⁻, SbF₆⁻, CF₃(CF₂)₃SO₃⁻ (CF₃CF₂SO₂)₂N⁻, CF₃CF₂CF₂COO⁻, (FSO₂)₂N⁻, Diese Anionen sind besonders gut in Polymeren löslich, die in Klebemassen verwendet werden, wie (Meth)Acrylaten, und können schnell genug durch die Matrix diffundieren, um ein vergleichsweise schnelles Trennverfahren zu ermöglichen. Gleichzeitig verbleiben keine Rückstände.

Besonders bevorzugt ist das Anion ausgewählt aus der Gruppe bestehend aus (CF₃SO₂)₂N⁻und (FSO₂)₂N⁻,

Diese Anionen sind besonders gut geeignet, da hiermit die beste elektrische Ablösbarkeit erzielt wird. Insbesondere gelingt das (Wieder-)Ablösen mit diesen Anionen besonders schnell und es verbleiben keine Rückstände.

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidin-Basis und Kationen auf Ammonium-Basis.

Diese Kationen sind besonders gut in Polymeren löslich, die in Klebemassen verwendet werden, wie (Meth)Acrylaten, und können schnell genug durch die Matrix diffundieren, um ein vergleichsweise schnelles Trennverfahren zu ermöglichen. Gleichzeitig verbleiben keine Rückstände.

Besonders bevorzugt ist das Kation ausgewählt aus der Gruppe bestehend aus Kationen auf Imidazolium-Basis.

Diese Kationen sind besonders gut geeignet, da hiermit die beste elektrische Ablösbarkeit erzielt wird. Insbesondere gelingt das (Wieder-)Ablösen mit diesen Kationen besonders schnell und es verbleiben keine Rückstände.

Ganz besonders bevorzugt ist das Kation ausgewählt aus der Gruppe bestehend aus 1-Ethyl-3-methylimidazolium und 1-Butyl-3-methylimidazolium. Wiederum bevorzugt ist das Kation 1-Ethyl-3-methylimidazolium.

Besonders bevorzugt ist der Elektrolyt der Klebemasseschicht D ausgewählt aus der Gruppe bestehend aus den ionischen Flüssigkeiten 1-Ethyl-3-methylimidazolium-bis(trifluormethylsulfonyl)imid (EMIM-TFSI) und 1-Ethyl-3-methylimidazolium bis(fluorsulfonyl)imid (EMIM-FSI). Diese ionischen Flüssigkeiten sind besonders gut in Polymeren löslich, die in Klebemassen verwendet werden, wie (Meth)Acrylaten, und können schnell genug durch die Matrix diffundieren, um ein vergleichsweise schnelles Trennverfahren zu ermöglichen. Gleichzeitig verbleiben keine Rückstände.

Die Masse der ersten Klebemasseschicht D enthält bevorzugt wenigstens ein Polymer.

Besonders bevorzugt ist es, dass die erste Klebemasseschicht D poly(meth)acrylat-basiert ist. Unter dem Ausdruck "(meth)acrylat-basiert" ist im Rahmen der vorliegenden Erfindung zu verstehen, dass Poly(meth)acrylate die Hauptpolymere der Klebemasse darstellen und dementsprechend zu 90 bis 100 Gew.-% in der Klebemasseschicht D enthalten sind, dabei bezogen auf 100 Gew.-%, also bezogen auf die Gesamtmenge an in der Klebemasseschicht D enthaltenen Polymeren. Etwaige in der Klebemasseschicht D enthaltenen Klebharze werden nicht zu den 100 Gew.-% an enthaltenen Polymeren gezählt.

Sofern die Klebemasseschicht weniger als 100 Gew.-% (bezogen auf die Gesamtmenge an enthaltenen Polymeren) an Poly(meth)acrylaten enthält, enthält sie wenigstens einen Typen an weiteren Polymeren.

Besonders bevorzugt sind die in der Klebemasseschicht D enthaltenen Polymere zu 100 Gew.-% Poly(meth)acrylate.

Bei den Poly(meth)acrylaten sämtlicher Ausführungsformen kann es sich prinzipiell um jegliche Poly(meth)acrylate handeln, die für die Verwendung in Klebemassen geeignet sind.

Unter einem "Poly(meth)acrylat" wird ein Polymer verstanden, welches insbesondere durch radikalische oder anionische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Bevorzugt enthält das Poly(meth)acrylat zumindest anteilig einpolymerisierte funktionelle Monomere, besonders bevorzugt Monomere wenigstens einer Sorte mit wenigstens einer funktionellen Gruppe, die ausgewählt ist aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen.

Die genannten Gruppen mit Ausnahme von Epoxidgruppen weisen eine Reaktivität mit Epoxidgruppen auf, wodurch das Poly(meth)acrylat vorteilhaft einer thermischen Vernetzung mit eingebrachten Epoxiden zugänglich wird.

Ganz besonders bevorzugt enthält das Poly(meth)acrylat zumindest anteilig einpolymerisierte funktionelle Monomere, besonders bevorzugt Monomere wenigstens einer Sorte mit wenigstens einer funktionellen Gruppe, die ausgewählt ist aus der Gruppe bestehend aus Carbonsäuregruppen, und Epoxidgruppen; insbesondere enthält es mindestens eine Carbonsäuregruppe.

Gemäß besonders vorteilhafter Ausführungsformen enthält das Poly(meth)acrylat anteilig einpolymerisierte Acrylsäure und/oder Methacrylsäure. Hierdurch weist das Poly(meth)acrylat aufgrund der Carbonsäuregruppen eine Reaktivität mit Epoxidgruppen auf, wodurch das Poly(meth)acrylat vorteilhaft einer thermischen Vernetzung mit eingebrachten Epoxiden zugänglich wird.

Das Poly(meth)acrylat kann bevorzugt auf die folgende Monomerzusammensetzung zurückgeführt werden:
a) mindestens ein Acrylsäureester und/oder Methacrylsäureester der folgenden Formel (1)

   (1) CH₂=C(R^{I})(COOR^{II}),

   worin R^{I} = H oder CH₃ und R" ein Alkylrest mit 4 bis 18 C-Atomen ist;
b) mindestens ein olefinisch ungesättigtes Monomer mit mindestens einer funktionellen Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen;
c) optional weitere Acrylsäureester und/oder Methacrylsäureester und/oder olefinisch ungesättigte Monomere, die mit der Komponente (a) copolymerisierbar sind.

Gemäß einer besonders vorteilhaften Ausführungsform basiert das Poly(meth)acrylat auf einer Monomerzusammensetzung, die Monomere der Gruppe a) mit einem Anteil von 93 bis 99 Gew.-% und Monomere der Gruppe b) mit einem Anteil von 1 bis 7 Gew.-% enthält.

Mit einem derartigen Poly(meth)acrylat in der Klebemasseschicht D des erfindungsgemäßen Klebebandes wird ein besonders gutes Eigenschaftsprofil umfassend die Klebrigkeit, die Schockbeständigkeit sowie die rückstandsfreie Ablösbarkeit erzielt.

Die Monomere der Komponente a) sind allgemein weichmachende, eher unpolare Monomere. Besonders bevorzugt ist R" in den Monomeren a) ein Alkylrest mit 4 bis 10 C-Atomen. Die Monomere der Formel (1) sind insbesondere ausgewählt aus der Gruppe bestehend aus n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat, 2-Ethylhexylmethacrylat, 2-Propylheptylacrylat und 2-Propylheptylmethacrylat.

Besonders bevorzugt sind die Monomere der Formel (1) bzw. der Gruppe a) ausgewählt aus der Gruppe bestehend aus n-Butylacrylat, n-Hexylacrylat, n-Octylacrylat, Isooctylacrylat, 2-Ethylhexylacrylat und 2-Propylheptylacrylat.

Die genannten Monomere lassen sich besonders gut polymerisieren und die Glasübergangstemperatur des hergestellten Poly(meth)acrylates besonders gut einstellen. Hierdurch können wiederum optimierte Eigenschaften im Hinblick auf die Fließfähigkeit und Klebrigkeit erzielt werden, welche auch an das jeweilige zu verklebende Substrat bzw. Bauteil angepasst sind.

Dabei sind die Monomere der Formel (1) bzw. der Gruppe a) wiederum bevorzugt ausgewählt aus der Gruppe bestehend aus n-Butylacrylat, Isooctylacrylat und 2-Ethylhexylacrylat.

Ganz besonders bevorzugt werden als Monomere der Formel (1) bzw. der Gruppe a) n-Butylacrylat und 2-Ethylhexylacrylat verwendet.

Die Monomere der Gruppe b) sind besonders bevorzugt ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, 2-Hydroxyethylacrylat, Hydroxypropylacrylat, 3-Hydroxypropylacrylat, Hydroxybutylacrylat, 4-Hydroxybutylacrylat, Hydroxyhexylacrylat, 6-Hydroxyhexylacrylat, Hydroxyethylmethacrylat, 2-Hydroxyethylmethacrylat, Hydroxypropylmethacrylat, 3-Hydroxypropylmethacrylat, Hydroxybutylmethacrylat, 4-Hydroxybutylmethacrylat, Hydroxyhexylmethacrylat, 6-Hydroxyhexylmethacrylat, Allylalkohol, Glycidylacrylat, Glycidylmethacrylat.

Bevorzugt sind die Monomere der Gruppe b) ausgewählt aus Acrylsäure, Methacrylsäure und Hydroxyethylacrylat.

Ganz besonders bevorzugt wird als Monomere der Gruppe b) Acrylsäure verwendet.

Beispielhafte Monomere der Komponente c) sind:
Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxypolyethylenglykolmethacrylat 350, Methoxypolyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluorethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid; N,N-Dialkyl-substituierte Amide wie beispielsweise N,N-Dimethylacrylamid und N,N-Dimethylmethacrylamid; N-Benzylacrylamid, N-Isopropylacrylamid, N-tert-Butylacrylamid, N-tert-Octylacrylamid, N-Methylolacrylamid, N-Methylolmethacrylamid, Acrylnitril, Methacrylnitril; Vinylether wie Vinylmethylether, Ethylvinylether, Vinylisobutylether; Vinylester wie Vinylacetat; Vinylhalogenide, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol; Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente c) können vorteilhaft auch derart gewählt werden, dass sie funktionelle Gruppen enthalten, die eine nachfolgende strahlenchemische Vernetzung (beispielsweise durch Elektronenstrahlen oder UV-Strahlung) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Bevorzugt handelt es sich bei dem Poly(meth)acrylat um ein Polyacrylat, welches durch Polymerisation von n-Butylacrylat und/oder n-Hexylacrylat und/oder n-Octylacrylat und/oder Isooctylacrylat und/oder 2-Ethylhexylacrylat und/oder 2-Propylheptylacrylat und Acrylsäure hergestellt ist.

Besonders bevorzugt handelt es sich bei dem Poly(meth)acrylat um ein Polyacrylat, welches durch Polymerisation von n-Butylacrylat, 2-Ethylhexylacrylat und Acrylsäure hergestellt ist.

Hierdurch weist das erfindungsgemäße Klebeband eine besonders hohe Klebkraft auf.

Die Herstellung der Poly(meth)acrylate geschieht bevorzugt durch konventionelle radikalische Polymerisationen oder kontrollierte radikalische Polymerisationen. Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Bis-(4-tert-butylcyclohexyl)peroxydicarbonat, Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo^{®} 67^{™} der Firma DuPont) oder 2,2'-Azobis(2-methylpropionitril) (2,2'-Azobisisobutyronitril; AIBN; Vazo^{®} 64^{™} der Firma DuPont).

Gemäß bevorzugter Ausführungsformen wird Bis-(4-tert-butylcyclohexyl)peroxydicarbonat verwendet.

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Nach der Herstellung der Poly(meth)acrylate können diese sowohl aus Lösung weiterverarbeitet werden, oder es erfolgt eine Aufkonzentration, und die weitere Verarbeitung der Poly(meth)acrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte (Gewichtsmittel der Molekulargewichtsverteilung) Mw des oder der Poly(meth)acrylate liegen bevorzugt in einem Bereich von 20.000 bis 2.000.000 g/mol, besonders bevorzugt in einem Bereich von 100.000 bis 1.500.000 g/mol, ganz besonders bevorzugt in einem Bereich von 150.000 bis 1.000.000 g/mol. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Mit einem derartigen Mw inklusive sämtlicher Bevorzugungsstufen des oder der Poly(meth)acrylate wird eine ausreichende Kohäsion bei gleichzeitig guter Fließfähigkeit und guter Adhäsion der Klebemasse erzielt, wobei es sich versteht, dass die Klebemasse hinsichtlich des Eigenschaftsprofils der genannten Eigenschaften bei höherer Bevorzugungsstufe in einem höheren Maß optimiert ist.

Die Bestimmung des Mw erfolgt gemäß GPC wie unter den Prüfmethoden beschrieben.

Die Poly(meth)acrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität von Polymeren.

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

Bevorzugt weist das Poly(meth)acrylat eine Polydispersität PD < 4 und somit eine relativ enge Molekulargewichtsverteilung auf. Darauf basierende Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Ferner lässt sich in vorteilhafter Weise die Atom Transfer Radical Polymerization (ATRP) zur Synthese eng verteilter Poly(meth)acrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co-, Ir-, Ag- oder Au-Komplexe eingesetzt werden. Auch RAFT-Polymerisation ist geeignet.

Die Poly(meth)acrylate sind bevorzugt durch Verknüpfungsreaktionen - insbesondere im Sinne von Additions- oder Substitutionsreaktionen - von in ihnen enthaltenen funktionellen Gruppen, wie insbesondere Carbonsäuregruppen, mit thermischen Vernetzern vernetzt. Hierdurch ergibt sich der Vorteil, dass die Klebemasse nicht zu weich ist und einen nicht zu hohen Kaltfluss aufweist. Dies wirkt sich vorteilhaft auf die Kohäsion der Klebemasse sowie die Lagerung und Verarbeitbarkeit der Klebemasse aus.

Es können alle thermischen Vernetzer verwendet werden, die
- sowohl eine ausreichend lange Verarbeitungszeit gewährleisten, sodass es nicht zu einer Vergelung während des Verarbeitungsprozesses, insbesondere des Extrusionsprozesses, kommt,
- als auch zu einer schnellen Nachvernetzung des Polymers auf den gewünschten Vernetzungsgrad bei niedrigeren Temperaturen als der Verarbeitungstemperatur, insbesondere bei Raumtemperatur, führen.

Möglich ist beispielsweise eine Kombination aus Carboxy- (Carbonsäure-), Amino- und/oder Hydroxygruppen enthaltenden Polymeren und Isocyanaten, insbesondere aliphatischen oder blockierten Isocyanaten, beispielsweise mit Aminen deaktivierten trimerisierten Isocyanaten, als Vernetzer. Geeignete Isocyanate sind insbesondere trimerisierte Derivate von MDI [4,4-Methylendi(phenylisocyanat)], HDI [Hexamethylendiisocyanat, 1,6-Hexylendiisocyanat] und IPDI [Isophorondiisocyanat, 5-Isocyanato-1-isocyanatomethyl-1,3,3-trimethylcyclohexan].

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Auch eine Vernetzung über Komplexbildner, auch als Chelate bezeichnet, ist möglich. Ein bevorzugter Komplexbildner ist beispielsweise Aluminiumacetylacetonat.

Bevorzugt sind die Poly(meth)acrylate mittels Epoxid(en) bzw. mittels einer oder mehrerer epoxidgruppenhaltiger Substanz(en) vernetzt. Hierdurch wird eine dauerhafte, nichtreversible, Vernetzung sichergestellt.

Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole, insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche; Epoxyether mehrwertiger Phenole, insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyethylether; Phenol-Formaldehyd-Kondensationsprodukte wie Phenolalkohole und Phenolaldehydharze; S- und N-haltige Epoxide, zum Beispiel N,N-Diglycidylanilin, N,N'-Dimethyldiglycidyl-4,4-Diaminodiphenylmethan, Tetraglycidyl-meta-Xylenediamine; sowie Epoxide, welche nach üblichen Verfahren aus mehrfach ungesättigten Carbonsäuren oder einfach ungesättigten Carbonsäureestern ungesättigter Alkohole hergestellt worden sind; Glycidylester; Polyglycidylester, die durch Polymerisation oder Mischpolymerisation von Glycidylestern ungesättigter Säuren gewonnen werden können oder aus anderen sauren Verbindungen, zum Beispiel aus Cyanursäure, Diglycidylsulfid oder cyclischem Trimethylentrisulfon bzw. dessen Derivaten erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Weitere bevorzugte Epoxide sind cycloaliphatische Epoxide wie 3,4-Epoxycyclohexylmethyl-3,4-epoxycyclohexancarboxylat (UVACure1500).

Gemäß bevorzugter Ausführungsformen wird als Vernetzer Tetraglycidyl-meta-Xylenediamin verwendet.

Gemäß bevorzugter Ausführungsformen sind die Poly(meth)acrylate mittels eines Vernetzer-Beschleuniger-Systems ("Vernetzungssystem") vernetzt, um eine bessere Kontrolle sowohl über die Verarbeitungszeit, die Vernetzungskinetik sowie den Vernetzungsgrad zu erhalten. Das Vernetzer-Beschleuniger-System umfasst bevorzugt zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltiger Verbindungen beschleunigend wirkende Substanz als Beschleuniger.

Als Beschleuniger werden erfindungsgemäß besonders bevorzugt Amine eingesetzt. Diese sind formell als Substitutionsprodukte des Ammoniaks aufzufassen; die Substituenten umfassen insbesondere Alkyl- und/oder Arylreste. Besonders bevorzugt werden solche Amine eingesetzt, die mit den zu vernetzenden Polymeren keine oder nur geringfügige Reaktionen eingehen.

Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Aminogruppen aufweisen. Besonders bevorzugte Beschleuniger sind tertiäre Amine wie beispielweise Triethylamin, Triethylendiamin, Benzyldimethylamin, Dimethylaminomethylphenol, 2,4,6-Tris-(N,N-dimethylaminomethyl)-phenol, N,N'-Bis(3-(dimethylamino)propyl)harnstoff. Weitere bevorzugte Beschleuniger sind multifunktionelle Amine wie Diamine, Triamine und/oder Tetramine, zum Beispiel Diethylentriamin, Triethylentetramin, Trimethylhexamethylendiamin.

Weitere bevorzugte Beschleuniger sind Aminoalkohole, insbesondere sekundäre und/oder tertiäre Aminoalkohole, wobei im Falle mehrerer Aminofunktionalitäten pro Molekül bevorzugt mindestens eine, besonders bevorzugt alle Aminofunktionalitäten sekundär und/oder tertiär sind. Besonders bevorzugte, derartige Beschleuniger sind Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und N,N,N'-Trimethylaminopropylethanolamin.

Weitere geeignete Beschleuniger sind Pyridin, Imidazole wie beispielsweise 2-Methylimidazol und 1,8-Diazabicyclo[5.4.0]undec-7-en. Auch cycloaliphatische Polyamine können als Beschleuniger eingesetzt werden. Geeignet sind auch Beschleuniger auf Phosphorbasis wie Phosphine und/oder Phosphoniumverbindungen, beispielsweise Triphenylphosphin oder Tetraphenylphosphoniumtetraphenylborat.

Auch quartäre Ammoniumverbindungen können als Beschleuniger verwendet werden; Beispiele sind Tetrabutylammoniumhydroxid, Cetyltrimethylammoniumbromid und Benzalkoniumchlorid.

Bevorzugt ist es, dass die erste Klebemasseschicht D 2 bis 10 Gew.-%, besonders bevorzugt 4 bis 6 Gew.-%, an Elektrolyten, bevorzugt ionischen Flüssigkeiten, bezogen auf 100 Gew.-% an enthaltenen Polymeren enthält, wobei die Polymere bevorzugt zu 100 Gew.-% Poly(meth)acrylate sind.

Mit einer derartigen bevorzugten bzw. besonders bevorzugten Menge an Elektrolyten, insbesondere ionischen Flüssigkeiten, wird ein vergleichsweise schnelles elektrisches Ablösen ermöglicht, wobei gleichzeitig die Adhäsion der Klebemasseschicht an das Substrat vor dem Ablösen nicht negativ beeinträchtigt ist.

Die Klebemasse der ersten Klebemasseschicht D kann ferner weitere übliche Additive, wie Klebharze, Weichmacher, Kompatibilisatoren und Füllstoffe enthalten.

Als Kompatibilisatoren werden bevorzugt niedermolekulare Polyether, Polyamine, Polyvinylpyrrolidone oder aliphatische Polyester eingesetzt, die mit der Klebemasse homogen mischbar sind.

Einige Weichmacher können auch zugleich Kompatibilisatoren sein, wie z.B. Polyethylenglykol (PEG).

Gemäß besonders bevorzugter Ausführungsformen enthält die Klebemasse der ersten Klebemasseschicht D wenigstens einen Polyether, bevorzugt wenigstens eine Substanz, die ausgewählt ist aus der Gruppe bestehend aus Polyethylenglykol (PEG), Polypropylenglykol (PPG), Polytetrahydrofuran, wobei PEG und PPG besonders bevorzugt sind. Hiermit wird die Ablösbarkeit besonders gut unterstützt. Ohne an eine bestimmte Theorie gebunden sein zu wollen, ist es denkbar, dass durch die genannten Substanzen, insbesondere PEG, der lonenfluss des oder der Elektrolyten durch die Masseschicht beschleunigt wird.

Das Molekulargewicht (gemäß GPC) der genannten Substanzen liegt dabei bevorzugt zwischen 100 und 5000 g/mol, besonders bevorzugt zwischen 200 und 2000 g/mol.

Dem Fachmann ist bekannt, dass PEG und PPG mit unterschiedlichen Molekulargewichten Mw erhältlich sind, wie beispielsweise PEG 400 oder PPG 600, wobei die Zahl das Mw angibt.

Die Trägerschicht T ist elektrisch leitfähig.

Bevorzugt umfasst die elektrisch leitfähige Trägerschicht T wenigstens ein Metall. Besonders bevorzugt ist das Metall ausgewählt aus der Gruppe bestehend aus Kupfer, Nickel, Zink, Zinn, Silber, Gold, Aluminium, Eisen, Chrom und Legierungen dieser genannten Metalle. Ganz besonders bevorzugt ist das Metall ausgewählt aus der Gruppe bestehend aus Aluminium, Kupfer und Nickel.

Bevorzugt weist die elektrisch leitfähige Trägerschicht T eine Schichtdicke, gemessen in z-Richtung, also parallel zur Stapelrichtung der Schichtanordnung, von 10 nm (Nanometer) bis 50 µm (Mikrometer) auf.

Die elektrisch leitfähige Trägerschicht T weist gemäß bevorzugter Ausführungsformen der Erfindung a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgedampften Metalls, bevorzugt ausgewählt aus der Gruppe bestehend aus Kupfer und Aluminium, und/oder d) wenigstens ein Gitter aus Metall auf.

Es ist dabei prinzipiell auch denkbar, dass die Schicht T eine Kombination von zwei oder mehreren der genannten Möglichkeiten aufweist.

Metallfolien, wie beispielsweise und bevorzugt Aluminiumfolien, sind dem Fachmann bekannt.

Bevorzugt weist die Metallfolie, beispielsweise und bevorzugt die Aluminiumfolie, eine Schichtdicke, gemessen in z-Richtung, also parallel zur Stapelrichtung der Schichtanordnung, von 5 bis 50 µm, besonders bevorzugt von 10 bis 30 µm auf.

Elektrisch leitfähige Textilien sind dem Fachmann bekannt, insbesondere unter dem englischen Ausdruck "conductive mesh". Hierbei handelt es sich um ein textiles Gewebe, zum Beispiel aus PET (Polyethylenterephthalat), welches mit einem Metall, zum Beispiel mit Kupfer und/oder Nickel, beschichtet ist, wodurch die elektrische Leitfähigkeit des Gewebes hergestellt ist.

Dem Fachmann ist ebenfalls bekannt, dass Metalle direkt als Monolage oder Mehrfachlage auf Flächen, wie hier die Oberfläche einer Klebemasseschicht aufgedampft werden können. Im Rahmen der vorliegenden Erfindung kann die Trägerschicht T durch Aufdampfen von Metall auf die Klebemasseschicht D oder die Klebemasseschicht C bereitgestellt werden. Bevorzugt beträgt die Schichtdicke der Schicht T in diesem Fall größer oder gleich 10 nm (Nanometer), bevorzugt 50 bis 200 nm.

Ferner sind dem Fachmann Gitter aus Metall unterschiedlicher Dimensionen bekannt. Metallgitter mit geeigneten Schichtdicken können beispielsweise durch ein Gelege aus entsprechend dünnen Metallfäden oder durch Stanzen wenigstens einer Folie entsprechender Schichtdicke hergestellt sein.

Erfindungsgemäß umfasst das Klebeband eine zweite Klebemasseschicht C, wobei die Klebemasseschicht C elektrisch leitfähig ist.

Bevorzugt enthält die elektrisch leitfähige Klebemasseschicht C hierzu wenigstens ein Metall, wie insbesondere Nickel, Kupfer, Silber, bevorzugt in Form von elektrisch leitfähigen Metallpartikeln und/oder metallisierten Partikeln, besonders bevorzugt Metallpartikeln. Metallisierte Partikel sind insbesondere und bevorzugt Glas- oder Polymerpartikel, die mit wenigstens einem Metall metallisiert sind, sodass die zuvor elektrisch nicht leitfähigen Partikel durch die Metallisierung elektrisch leitfähig ausgestaltet sind.

Besonders bevorzugt enthält die elektrisch leitfähige Klebemasseschicht C elektrisch leitfähige Partikel, die ausgewählt sind aus der Gruppe bestehend aus Nickelpartikeln, Kupferpartikeln und versilberten Kupferpartikeln.

Gemäß besonders bevorzugter Ausführungsformen enthält die elektrisch leitfähige Klebemasseschicht Nickelpartikel.

Bevorzugt enthält die elektrisch leitfähige Klebemasseschicht C 5 bis 40 Gew.-%, besonders bevorzugt 20 bis 40 Gew.-%, ganz besonders bevorzugt 25 bis 35 Gew.-%, an elektrisch leitfähigen Partikeln, insbesondere Metallpartikeln und/oder metallisierten Partikeln, bezogen auf 100 Gew.-% an enthaltenen Polymeren und Klebharzen.

Die elektrisch leitfähigen Partikel sollten bevorzugt nicht oder nicht deutlich größer sein als die Dicke der Klebemasseschicht C in z-Richtung, gemessen mit dem Lichtmikroskop. Bevorzugt weisen die elektrisch leitfähigen Partikel eine durchschnittliche Partikelgröße von 1 bis 20 µm, besonders bevorzugt von 1 bis 10 µm, wiederum bevorzugt von 3 bis 5 µm, wie insbesondere 4 µm, auf.

Die Schicht C ist insbesondere wenigstens in z-Richtung elektrisch leitfähig.

Sie kann aber auch in der xy-Ebene elektrisch leitfähig sein. Wenn die Schicht C lediglich in z-Richtung, nicht aber notwendigerweise in xy-Richtung elektrisch leitfähig ausgestaltet ist, ist gemäß bevorzugter Ausführungsformen, in denen ein Metall, insbesondere Metallpartikel, zugegeben werden, um die elektrische Leitfähigkeit zu erzielen, eine geringere Menge dieser Materialien notwendig. Hierdurch ist die Klebemasse hinsichtlich erforderlicher Leitfähigkeit, Klebkraft, Fließverhalten und der Kosten optimiert.

Eine Schicht gilt im Rahmen der vorliegenden Erfindung insbesondere dann als "elektrisch leitfähig", wenn der Widerstand kleiner als 1 Ohm ist, gemessen in der jeweiligen Richtung, hier insbesondere in z-Richtung, nach dem Standard MIL-DTL-83528C.

Die Masse der Klebemasseschicht C kann ansonsten prinzipiell jegliche Klebemasse sein, die elektrisch leitfähig ausgestaltet werden kann und in der sich bevorzugt Metallpartikel homogen verteilen lassen.

Die Klebemasseschicht C ist dabei gemäß bevorzugter Ausführungsformen der Erfindung wie die Klebemasseschicht D poly(meth)acrylat-basiert. Hierbei gelten sämtliche obige Ausführungen zu der Definition und Art und Menge von poly(meth)acrylat-basiert bzw. Poly(meth)acrylaten.

Gemäß bevorzugter Ausführungsformen der Erfindung wird in der Klebemasseschicht C das gleiche Poly(meth)acrylat verwendet, wie in der Klebemasseschicht D.

Hierdurch können insbesondere ähnliche Substrate, hier als A und B bezeichnet, miteinander verklebt sein. Ferner wird hierdurch die Alterungs- und Temperaturbeständigkeit des Klebebandes erhöht.

Gemäß weiterer bevorzugter Ausführungsformen der Erfindung wird in der Klebemasseschicht C ein Polymer verwendet, welches von dem in der Klebemasseschicht D verwendeten Poly(meth)acrylat verschieden ist.

Hierdurch können die Eigenschaften der leitfähigen Schicht besonders gut an das Substrat angepasst werden, welches über die Klebemasseschicht C verklebt ist. Dadurch, dass die Klebemasseschicht C bevorzugt keinen Elektrolyten, wie eine ionische Flüssigkeit enthält bzw. enthalten muss, müssen die Bestandteile hierauf nicht abgestimmt werden.

Gemäß weiterer bevorzugter Ausführungsformen der Erfindung wird in der Klebemasseschicht C somit ein Poly(meth)acrylat verwendet, welches von dem in der Klebemasseschicht D verwendeten Poly(meth)acrylat verschieden ist.

Gemäß weiterer bevorzugter Ausführungsformen der Erfindung ist in der Klebemasseschicht C wenigstens ein Vinylaromatenblockcopolymer enthalten.

Gemäß bevorzugter Ausführungsformen der Erfindung basiert die Klebemasseschicht C auf Vinylaromatenblockcopolymer(en), das heißt, dass gemäß dieser Ausführungsformen Vinylaromatenblockcopolymere die Hauptpolymere in der Klebemasseschicht C darstellen und hierbei zu 70 bis 100 Gew.-% enthalten sind, und zwar bezogen auf 100 Gew.-% an in der Schicht C enthaltenen Polymeren.

Etwaige in der Klebemasseschicht C enthaltenen Klebharze werden im Rahmen dieser Berechnung nicht zu den 100 Gew.-% an enthaltenen Polymeren gezählt.

Bei dem bzw. den Vinylaromatenblockcopolymer(en) kann es sich prinzipiell um jegliche dem Fachmann bekannten Typen handeln.

Bevorzugt haben die Vinylaromatenblockcopolymere den Aufbau A-B, A-B-A und/oder (AB)ₙX, wobei X für einen Rest eines Kopplungsreagenzes oder Initiators steht und n größer oder gleich 2 ist.

Besonders bevorzugt haben das oder die Vinylaromatenblockcopolymere den Aufbau A-B-A, optional im Gemisch mit Anteilen an A-B, wobei letztere den Diblockanteil darstellen.

Ganz besonders bevorzugt liegen das oder die Vinylaromatenblockcopolymere als Gemisch von Polymeren des Aufbaus A-B-A mit Polymeren des Aufbaus A-B vor.

Die Blöcke A stellen die aus Vinylaromaten-Monomeren hergestellten Blöcke dar.

Bevorzugt sind die Blöcke A hergestellt aus einer Polymerisationsmischung enthaltend wenigstens Styrol und α-Methylstyrol, bevorzugt hergestellt aus einer Polymerisationsmischung enthaltend wenigstens Styrol. Ganz besonders bevorzugt sind die Blöcke A aus Styrol hergestellte Blöcke und damit Polystyrol-Blöcke.

Die Blöcke B stellen die übrigen Blöcke des Block-Copolymers dar. Bevorzugt sind die Blöcke B hergestellt aus einer Polymerisationsmischung enthaltend Monomere von 1,3-Dienen und Isobutylen, weiter bevorzugt hergestellt aus einer Polymerisationsmischung enthaltend Butadien und/oder Isopren. Ganz besonders bevorzugt sind die Blöcke B aus Butadien hergestellte Blöcke und damit Polybutadien-Blöcke.

Besonders bevorzugt handelt es sich bei dem oder den Vinylaromatenblockcopolymer(en) um Styrolblockcopolymer(e), wiederum bevorzugt Styrolbutadien-Blockcopolymere des Aufbaus A-B-A und optionalen Anteilen an A-B.

Hiermit wird die der Erfindung zugrunde liegende Aufgabe besonders gut gelöst.

Gemäß besonders vorteilhafter Ausführungsformen weist die Haftklebmasseschicht als Vinylaromatenblockcopolymer eine Mischung aus wenigstens zwei Styrolbutadien-Blockcopolymeren auf, wobei ein erstes Blockcopolymer einen Diblockanteil A-B von 50 bis 85 % aufweist und ein zweites Blockcopolymer einen Diblockanteil A-B von 5 bis 35 % aufweist.

Hiermit wird die der Erfindung zugrunde liegende Aufgabe besonders gut gelöst.

Der Diblock-Anteil wird mittels GPC bestimmt und kann wie dem Fachmann bekannt durch die Wahl geeigneter Herstellverfahren gezielt eingestellt werden.

Bevorzugt beträgt das Gewichtsmittel der Molekulargewichtsverteilung Mw (gemäß GPC) der A-B-A Polymerstränge des oder der enthaltenen Vinylaromatenblockcopolymere von 50.000 g/mol bis 300.000 g/mol, besonders bevorzugt von 80.000 bis 180.000 g/mol.

Gemäß bevorzugter Ausführungsformen der Erfindung weist die Klebemasseschicht C wenigstens ein Klebharz auf, insbesondere wenn sie auf Vinylaromatenblockcopolymeren als Hauptpolymere basiert.

Hierdurch wird die Klebrigkeit der Klebemasse erhöht, und zwar ohne, dass die der Erfindung zugrunde liegende Aufgabe konterkariert wird. Somit ist die Klebemasseschicht C weiterhin leitfähig.

Unter einem "Klebharz" wird gemäß dem Verständnis des Fachmanns ein oligomeres oder polymeres Harz verstanden, das die Adhäsion (den Tack, die Eigenklebrigkeit) der Klebemasseschicht im Vergleich zu der kein Klebharz enthaltenden, ansonsten aber identischen Klebemasseschicht erhöht.

Bevorzugt weist das wenigstens eine Klebharz ein gewichtsmittleres Molekulargewicht M_{w} von 400 bis 15.000 g/mol, besonders bevorzugt von 400 bis 5.000 g/mol, ganz besonders bevorzugt von 500 bis 2.000 g/mol, auf.

Bevorzugt ist das wenigstens eine Klebharz ausgewählt aus der Gruppe bestehend aus nicht hydrierten, partiell oder vollständig hydrierten Harzen auf Basis von Kolophonium oder Kolophoniumderivaten, hydrierten Polymerisaten des Dicyclopentadiens, nicht hydrierten, partiell, selektiv oder vollständig hydrierten Kohlenwasserstoffharzen auf Basis von C-5, C-5/C-9 oder C-9 Monomergemischen und Polyterpenharzen auf Basis von α-Pinen und/oder β-Pinen und/oder δ-Limonen.

Dem Fachmann ist klar, dass er ein solches Klebharzes wählen kann, welches sich insbesondere mit dem oder den Vinylaromatenblockcopolymer(en) homogen vermischen lässt.

Die Klebemasse der zweiten Klebemasseschicht C kann ferner weitere übliche Additive, wie Weichmacher und Füllstoffe enthalten.

Gemäß bevorzugter Ausführungsformen ist bzw. sind die erste Klebemasseschicht D und/oder die zweite Klebemasseschicht C geschäumt.

Hierdurch ist die Schockbeständigkeit des erfindungsgemäßen Klebebandes und damit auch des verklebten Verbundes verbessert. Somit ist sichergestellt, dass es nicht zu einer vorzeitigen unerwünschten Ablösung der Substrate voneinander kommt, insbesondere wenn Kräfte, durch z.B. Fallenlassen, auf den verklebten Verbund einwirken.

Bevorzugt ist die Schäumung mittels Mikroballons hergestellt, wobei die Mikroballons im Fall der elektrisch ablösbaren Schicht D an ihrer Oberfläche eine Schicht aus Silikat oder Alumosilikat aufweisen.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit bzw. als Gas sind insbesondere Kohlenwasserstoffe der niederen Alkane, beispielsweise Isobutan oder Isopentan geeignet, die als verflüssigtes Gas unter Druck in der Polymerhülle eingeschlossen sind, wobei Isopentan besonders bevorzugt ist. Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel^{®} DU-Typen (DU = dry unexpanded) von der Firma Nuryon bzw. die Microsphere^{®} FN-Typen von der Firma Matsumoto.

Die Mikroballons besitzen zur Stabilisierung auf ihrer Oberfläche häufig eine anorganische Schicht. Dieses kann z.B. ein Silikat oder ein Alumosilikat sein. Es können aber auch Carbonate wie Calciumcarbonat eingesetzt werden, oder unterschiedliche Oxide.

Überraschenderweise hat sich im Rahmen der vorliegenden Erfindung herausgestellt, dass lediglich mit Mikroballons, welche an ihrer Oberfläche eine Schicht aus Silikat oder Alumosilikat aufweisen, eine elektrisch ablösbare und hierzu Elektrolyten enthaltende und gleichzeitig geschäumte Klebemasseschicht D herstellbar ist.

Silikate sind die Salze der Ortho-Kieselsäure (Si(OH)₄) und deren Kondensate. Alle Salze sind durch SiO₄-Tetraeder aufgebaute Verbindungen, deren Tetraeder jedoch auf verschiedene Weise miteinander verknüpft sein können. Unverknüpfte Stellen der Tetraeder tragen zum Ladungsausgleich Metallkationen bei oder liegen eventuell als Hydroxidionen (OH-) vor. Alumosilikate sind die Sammelbezeichnungen für chemische Verbindungen aus der Gruppe der Silikate, die sich aus den Grundbausteinen SiO₄-Tetraeder und AlO₄-Tetraeder aufbauen.

Ferner kann zwischen unexpandierten und vorexpandierten Mikroballons unterschieden werden.

Im Rahmen der vorliegenden Erfindung ist prinzipiell die Verwendung von unexpandierten und/oder vorexpandierten Mikroballons denkbar.

Unexpandierte Mikroballons werden dabei üblicherweise im unexpandierten Zustand einer Masse zugegeben und erst im Anschluss erfolgt eine Expansion, insbesondere durch Erwärmen.

Unexpandierte Mikroballontypen sind auch als wässrige Dispersion mit einem Feststoff beziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten Klebemasse geeignet.

Geschäumte Klebemasseschichten können auch mit sogenannten vorexpandierten Mikroballons erzeugt werden. Bei vorexpandierten Mikroballons findet eine Expansion schon vor der Einmischung in die Polymermatrix statt. Vorexpandierte Mikroballons sind beispielsweise unter der Bezeichnung Dualite^{®} kommerziell erhältlich. Bei der Verarbeitung von bereits expandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Um einen solchen Dichtegradienten weitgehend oder nahezu vollständig zu verhindern, werden erfindungsgemäß bevorzugt nicht oder nur wenig vorexpandierte und damit expandierbare Mikroballons in die Polymermatrix der Klebemasseschichten eingearbeitet. Erst nach dem Einarbeiten in die Schicht werden die Mikroballons expandiert. Auf diese Weise ergibt sich eine gleichmäßigere Verteilung der Mikroballons in der Polymermatrix.

Erst nach oder unmittelbar bei der Einarbeitung erfolgt dann die Expansion der expandierbaren Mikroballons, wodurch die Schäumung hergestellt wird. Bei lösungsmittelhaltigen Massen werden die Mikroballons bevorzugt erst nach dem Einarbeiten, Beschichten, Trocknen (Lösungsmittelabdampfen) expandiert.

Gemäß bevorzugter Ausführungsformen der Erfindung ist bzw. sind die erste Klebemasseschicht D und/oder die zweite Klebemasseschicht C somit geschäumt, wobei die Schäumung mittels Expandierens von expandierbaren Mikroballons hergestellt ist, wobei die expandierbaren Mikroballons an ihrer Oberfläche eine Schicht aus Silikat oder Alumosilikat aufweisen.

Bevorzugt beträgt der mittlere Durchmesser der von den Mikroballons gebildeten Hohlräume in der oder den geschäumten Klebemasseschicht(en) 10 bis 200 µm, besonders bevorzugt von 15 bis 200 µm, ganz besonders bevorzugt 15 bis 150 µm, wiederum bevorzugt von 20 bis 100 µm, wiederum besonders bevorzugt von 25 bis 70 µm. Mit den genannten bevorzugten und besonders bevorzugten Größenbereichen wird eine besonders gute Schockresistenz erzielt. Gleichzeitig sind die Größen im Hinblick auf die Schichtdicken der Klebemasseschicht(en) angepasst.

Da hierbei die Durchmesser der von den Mikroballons gebildeten Hohlräume in den geschäumten Klebemasseschicht(en) vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der Klebemasseschicht gemeint. Die Bestimmung des mittleren Durchmessers der von den Mikroballons gebildeten Hohlräume in einer Klebemasseschicht erfolgt anhand von 5 verschiedenen Kryobruchkanten des Klebebands im Rasterelektronenmikroskop (REM) bei 500-facher Vergrößerung. Die Durchmesser der auf den Aufnahmen zu sehenden Mikroballons werden graphisch derart ermittelt, dass aus den REM Aufnahmen für jeden einzelnen Mikroballon der zu untersuchenden Klebemasseschicht dessen maximale Ausdehnung in beliebiger (zweidimensionaler) Richtung entnommen wird und als dessen Durchmesser angesehen wird.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der oder den Klebemasseschichten liegt gemäß bevorzugter Ausführungsformen der Erfindung zwischen größer 0 Gew.-% und 12 Gew.-%, besonders bevorzugt zwischen 0,25 Gew.-% und 5 Gew.-%, ganz besonders bevorzugt zwischen 0,5 und 3 Gew.-%, jeweils bezogen auf die Gesamtzusammensetzung (einschließlich eingemischter Mikroballons) der entsprechenden Schicht. Die Angaben beziehen sich jeweils auf unexpandierte Mikroballons.

Durch die genannten Mengen wird der Zielkonflikt aus den Eigenschaften umfassend Klebrigkeit, Fließverhalten und Schäumung besonders gut gelöst.

Eine expandierbare Mikrohohlkugeln enthaltende Polymermasse der Klebemasseschicht(en) darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas. Geeignet für die Klebemasseschichten sind außerdem - unabhängig gewählt von anderen Additiven - Polymervollkugeln wie PMMA-Kugeln, Glashohlkugeln, Glasvollkugeln, Phenolharzkugeln, keramische Hohlkugeln, keramische Vollkugeln und/oder Kohlenstoffvollkugeln ("Carbon Micro Balloons").

Die absolute Dichte der geschäumten Klebemasseschicht(en) beträgt bevorzugt 350 bis 950 kg/m³, besonders bevorzugt 450 bis 930 kg/m³, ganz besonders bevorzugt 570 bis 880 kg/m³. Die relative Dichte beschreibt das Verhältnis der Dichte der jeweils geschäumten Schicht zur Dichte der entsprechenden rezepturidentischen, ungeschäumten Schicht. Die relative Dichte der Klebemasseschicht(en) beträgt vorzugsweise 0,35 bis 0,99, stärker bevorzugt 0,45 bis 0,97, insbesondere 0,50 bis 0,90.

Bevorzugt ist die Klebemasse der Klebemasseschicht D eine Haftklebemasse und die Klebemasseschicht D damit bevorzugt eine Haftklebemasseschicht D.

Hierdurch lässt sich das Klebeband an dieser Seite leicht verkleben, insbesondere da im Vergleich zu hitzeaktivierbaren Klebesystemen kein Wärmeeintrag erforderlich ist. Ferner wandern die Bestandteile des Elektrolyten, wie insbesondere die Ionen von ionischen Flüssigkeiten, in Haftklebemassen schneller aufgrund der vergleichsweise geringen Vernetzungsdichten.

Die Klebemasse der Klebemasseschicht C ist gemäß bevorzugter Ausführungsformen keine Haftklebemasse.

Gemäß weiterer bevorzugter Ausführungsformen der Erfindung ist die Klebemasse der Klebemasseschicht C eine Haftklebemasse und die Klebemasseschicht C damit eine Haftklebemasseschicht C.

In den Ausführungsformen, in denen sowohl die Klebemasseschicht D als auch die Klebemasseschicht C Haftklebemasseschichten sind, handelt es sich bei dem erfindungsgemäßen Klebeband um ein Haftklebeband.

Unter einer Haftklebemasse wird vorliegend erfindungsgemäß, wie allgemein üblich, ein Stoff verstanden, der - insbesondere bei Raumtemperatur - dauerhaft klebrig sowie klebfähig ist. Charakteristisch für eine Haftklebemasse ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art der Haftklebemasse, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA, gemäß DIN EN ISO 6721) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) • cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10⁰ bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Bevorzugt weist die Haftklebemasse im Deformationsfrequenzbereich von 10⁰ bis 10¹ rad/sec bei 23 °C einen Speichermodul G' und einen Verlustmoduls G" im Bereich von 10³ bis 10⁷ Pa, bestimmt gemäß DIN EN ISO 6721, auf.

Zur Erzielung der viskoelastischen Eigenschaften werden die Monomere, auf denen die der Haftklebemasse zugrundeliegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur (23 °C)) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Bevorzugt weist die Haftklebemasse eine Glasübergangstemperatur von ≤ 23 °C, bestimmt gemäß DIN 53765, auf.

Im Unterschied zu Haftklebemassen weisen Heißschmelzklebstoffe, z.B. auf der Basis von Polyamiden, Polyurethanen oder modifizierten Polyethylenen, bei Raumtemperatur (23 °C) keine Klebrigkeit auf, wiewohl auch in Heißschmelzklebstoffzusammensetzungen.

Das erfindungsgemäße Verfahren zur Herstellung des erfindungsgemäßen Klebebandes umfasst wie bereits ausgeführt folgende Verfahrensschritte:
a) Bereitstellung einer ersten Klebemasseschicht D, wobei die Klebemasseschicht D wenigstens ein Elektrolyt enthält; und
b) Bereitstellung einer elektrisch leitfähigen Trägerschicht T; und
c) Bereitstellung einer zweiten Klebemasseschicht C, wobei die Klebemasseschicht C elektrisch leitfähig ist,
d) Anordnung der Schichten D, T und C, wodurch ein Schichtverbund DTC als doppelseitiges Klebeband erhalten wird;
e) Optional Formen, insbesondere Stanzen oder Schneiden, des Schichtverbundes DTC.

Das Bereitstellen der ersten Klebemasseschicht D gemäß Schritt a) erfolgt insbesondere dadurch, dass wenigstens eine Klebemasse bereitgestellt wird und wenigstens ein Elektrolyt zu dieser Klebemasse gegeben wird. Für die Klebemasse und den Elektrolyten gelten sämtliche obige Ausführungen.

Die Klebemasse wird mittels bekannter Verfahren in Schichtform gebracht, insbesondere durch Ausstreichen.

Ferner können ggf. einer oder mehrere Trocknungsschritte erfolgen.

Das Bereitstellen der zweiten Klebemasseschicht C gemäß Schritt c) erfolgt insbesondere dadurch, dass wenigstens eine Klebemasse bereitgestellt wird, die elektrisch leitfähig ist. Bevorzugt wird die Klebemasse hierzu mit wenigstens einem Metall, insbesondere mit elektrisch leitfähigen Metallpartikeln und/oder metallisierten Partikeln, versetzt und das Metall, insbesondere die elektrisch leitfähigen Metallpartikel und/oder metallisierten Partikel durch Mischen homogen in der Klebemasse verteilt. Für die Klebemasse und das Metall gelten sämtliche obige Ausführungen.

Die Klebemasse wird mittels bekannter Verfahren in Schichtform gebracht, insbesondere durch Ausstreichen.

Ferner können ggf. einer oder mehrere Trocknungsschritte erfolgen.

Das Bereitstellen der Trägerschicht T gemäß Schritt b) kann wie oben bereits ausgeführt auf verschiedene Weise erfolgen.

So ist es denkbar, dass a) eine Metallfolie, insbesondere eine Aluminiumfolie, und/oder b) ein elektrisch leitfähiges Netz zwischen den Schichten D und C platziert wird.

Ferner können c) Metallpartikel direkt auf die Oberfläche der Klebemasseschicht D oder C aufgedampft werden.

Die Auflistung der Verfahrensschritte a) bis c) stellt somit nicht zwangsweise eine zeitliche Reihenfolge dar.

Erfindungswesentlich ist, dass die Schichten gemäß Schritt d) räumlich so angeordnet werden, dass sich der Schichtverbund DTC ergibt.

Bevorzugt besteht das Klebeband aus dem Schichtverbund DTC.

Das erfindungsgemäße Klebeband stellt insbesondere ein doppelseitiges Klebeband dar, bei dem eine Fläche der ersten Klebemasseschicht D und eine Fläche der zweiten Klebemasseschicht C jeweils zum Verkleben von Substraten verfügbar sind.

Vorteilhaft können die äußeren, frei liegenden Flächen der Klebemasseschichten D und C des erfindungsgemäßen Klebebandes mit antiadhäsiven Materialien ausgerüstet sein wie mit einem Trennpapier oder einer Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) (in z-Richtung) beträgt bevorzugt von 15 bis 150 µm, besonders bevorzugt von 20 bis 100 µm, ganz besonders bevorzugt von 25 bis 70 µm.

Die beiden Klebemasseschichten D und C weisen dabei gemäß bevorzugter Ausführungsformen unterschiedliche Schichtdicken auf, wobei die Dicke der Klebemasseschicht D beispielsweise geringer ist als die der Klebemasseschicht C.

Gemäß weiterer bevorzugter Ausführungsformen weisen die Schichten D und C die gleiche Schichtdicke auf.

Wenn die Schichtdicke der Schicht D zu hoch ist, wird diese aufgrund der enthaltenen Elektrolyten ggf. unwirtschaftlich teuer.

Auch bei der Schichtdicke der Schicht C ist zu beachten, dass bei größerer Schichtdicke mehr leitfähige Partikel nötig sind, um die Leitfähigkeit insbesondere in z-Richtung zu gewährleisten.

Wie oben ausgeführt erfolgt je nach vorhandenen und gewünschten Maßen optional gemäß Schritt e) ein Stanzen des Schichtverbundes DTC.

Nachfolgend werden bevorzugte Ausführungsformen der Erfindung unter Bezugnahme auf die beiliegenden Figuren näher erläutert und beschrieben. Dabei zeigen:
Fig. 1 eine vereinfachte schematische Querschnittsdarstellung durch ein erfindungsgemäßes doppelseitiges Klebeelement in einer bevorzugten Ausführungsform; und
Fig. 2 eine vereinfachte schematische Querschnittsdarstellung durch einen erfindungsgemäßen verklebten Verbund einer bevorzugten Ausführungsform; und
Fig. 3 eine vereinfachte schematische Querschnittsdarstellung durch einen erfindungsgemäßen verklebten Verbund, an den eine Spannung angelegt ist, in einer bevorzugten Ausführungsform; und
Fig. 4 eine vereinfachte schematische Querschnittsdarstellung durch einen erfindungsgemäßen verklebten Verbund, nachdem eine Spannung angelegt wurde und hierdurch eine adhäsive Spaltung erfolgt ist.

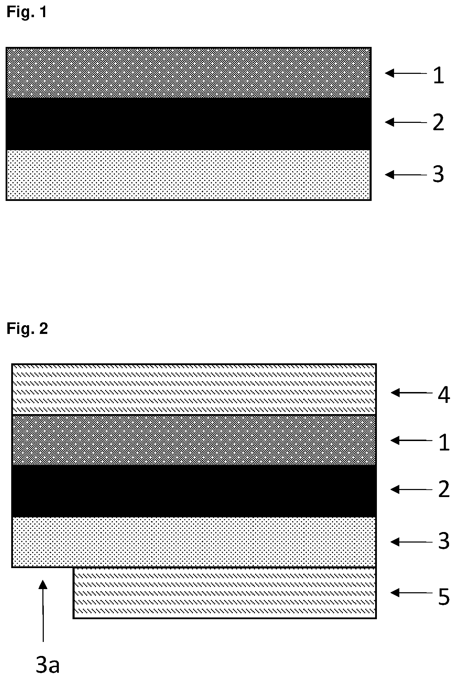

Wie in Fig. 1 erkennbar ist die Klebemasseschicht D 1 über eine ihrer Flächen mit der Trägerschicht T 2 verbunden. Auf der der Schicht D gegenüberliegenden Fläche der Trägerschicht T ist die zweite Klebemasseschicht C 3 angeordnet.

Wie in Fig. 1 ebenfalls erkennbar stellt der Schichtverbund ein doppelseitiges Klebeband dar, bei dem eine Fläche der ersten Klebemasseschicht D und eine Fläche der zweiten Klebemasseschicht C jeweils zum Verkleben verfügbar sind.

In Fig. 2 ist eine schematische Darstellung des erfindungsgemäßen verklebten Verbundes in einer bevorzugten Ausführungsform abgebildet. Wie anhand von Fig. 2 erkennbar, ist das Klebeband über die Klebemasseschicht D 1 auf einer Fläche des ersten Substrates A 4 angeordnet, wobei das erste Substrat wie ausgeführt elektrisch leitfähig ist.

Ferner ist das Klebeband über die zweite -elektrisch leitfähige - Klebemasseschicht C 3 auf einer Fläche eines zweiten Substrates B 5 angeordnet. Hierbei überragt die zweite Klebemasseschicht C das Substrat B in wenigstens einer Erstreckungsrichtung der Schichtebene seitlich, sodass die Klebemasseschicht C 3 in z-Richtung teilweise freiliegt bzw. eine freie Fläche 3a aufweist.

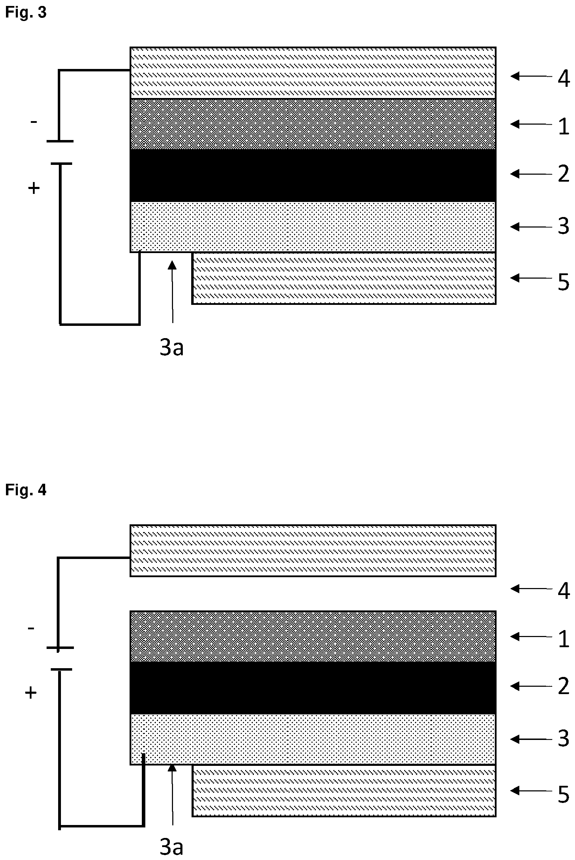

Über diese freie Fläche 3a kann nun eine Spannung angelegt werden, wie in der schematischen Darstellung gemäß Fig. 3 gezeigt.

Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A stark herabgesetzt und es erfolgt ein Lösen dieser Schichten voneinander, wie an der schematischen Darstellung gemäß Fig. 4 erkennbar.

Die Darstellungen in den Fig. 1 bis 4 sind wie ausgeführt schematische Darstellungen. Insbesondere können die Schichtdicken der einzelnen Schichten D, T und C voneinander abweichen. Ferner sind auch die Substrate A und B lediglich schematisch als weitere Schichten dargestellt. Diese können selbstverständlich jegliche andere räumliche Geometrie aufweisen.

Im Folgenden werden einige Beispiele beschrieben, um die Erfindung weiter zu verdeutlichen.

### Prüfmethoden

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

### Molekulargewicht Mₙ, M_{w}

Die Angaben des zahlenmittleren Molekulargewichts Mₙ bzw. gewichtsmittleren Molekulargewichts M_{w} in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, 8,0 mm * 50 mm (Angaben hier und im Folgenden in der Reihenfolge: Typ, Partikelgrösse, Porosität, Innendurchmesser * Länge; 1 Å = 10⁻¹⁰ m) verwendet. Zur Auftrennung wird eine Kombination der Säulen des Typs PSS-SDV, 5 µm, 10³ Ä sowie 10⁵ Å und 10⁶ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen wie zum Beispiel den Ausgangsstoffen des Polyurethans gegen PMMA-Standards (Polymethylmethacrylat-Kalibrierung) und sonst gegen PS-Standards (Polystyrol-Kalibrierung).

### Klebharzerweichungstemperatur

Die Klebharzerweichungstemperatur wird nach der einschlägigen Methodik durchgeführt, die als Ring & Ball bekannt ist und nach ASTM E28 standardisiert ist.

### Dicke

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### Klebkraft

### 180° Klebkrafttest:

Zum Testen der Klebkraft der elektrisch ablösbaren Schicht D auf Stahl: Ein 20 mm breiter Streifen eines erfindungsgemäßen Klebebands wird mit der elektrisch leitfähigen Klebmasseseite (Schicht C) auf eine PET-Folie geklebt, so dass die Klebmasse etwas überragt. Der Verbund wird mit der elektrisch ablösbaren Seite (Schicht D) auf eine Stahlplatte aufgebracht, die zuvor zweimal mit Aceton und einmal mit Isopropanol gewaschen wurde. Der Haftklebestreifen wird zweimal mit einem Anpressdruck entsprechend einem Gewicht von 2 kg auf das Substrat aufgedrückt. Das Klebeband wird anschließend sofort mit einer Geschwindigkeit von 300 mm/min und in einem Winkel von 180° vom Substrat abgezogen. Alle Messungen werden bei Raumtemperatur durchgeführt.

Die Messergebnisse sind in N/cm angegeben und sind gemittelt aus drei Messungen.

Zum Testen der Klebkraft der elektrisch leitfähigen Schicht C auf Stahl: Die Messungen werden analog durchgeführt, wobei zunächst ein 20 mm breiter Streifen eines erfindungsgemäßen Klebebands wird mit der elektrisch ablösbaren Klebmasseseite (Schicht D) auf eine PET-Folie geklebt wird, so dass die Klebmasse etwas überragt, und anschließend der Verbund mit der elektrisch leitfähigen Seite (Schicht C) auf eine Stahlplatte aufgebracht wird, usw.

### Erfindungsgemäßes Beispiel 1

Die Klebemasseschicht D wird folgendermaßen bereitgestellt:
Ein Basispolymer auf Basis von Acrylaten wird folgendermaßen hergestellt: Ein für radikalische Polymerisationen konventioneller Reaktor wird mit 48 kg 2-Ethylhexylacrylat, 48 kg n-Butylacrylat, 4 kg Acrylsäure und 66 kg Benzin/Aceton (70/30) befüllt. Nach 45-minütiger Durchleitung von Stickstoffgas unter Rühren wird der Reaktor auf 58 °C hochgeheizt und 50 g AIBN hinzugegeben. Anschließend wird das äußere Heizbad auf 75 °C erwärmt und die Reaktion konstant bei dieser Außentemperatur durchgeführt. Nach 1 h werden erneut 50 g AIBN zugegeben und nach 4 h wird mit 20 kg Benzin/Aceton Gemisch verdünnt. Nach 5,5 sowie nach 7 h wird jeweils mit 150 g Bis-(4-tert-butylcyclohexyl)peroxydicarbonat nachinitiiert. Nach 22 h Reaktionszeit wird die Polymerisation abgebrochen und auf Raumtemperatur abgekühlt. Das Polyacrylat hat ein mittleres Molekulargewicht von Mw = 386.000 g/mol, mit einer Polydispersität PD (Mw/Mn) =3,6

Zu 100 Gew.-% bezogen auf die Menge des Acrylat-Basispolymers ohne Lösemittel werden 5,5 Gew.-% der ionischen Flüssigkeit 1-Ethyl-3-methylimidazolium-bis(trifluormethylsulfonyl)imid (EMIM-TFSI) und 4 Gew.-% Polyethylenglykol 400, Fa. Sigma Aldrich, versetzt.

Zusätzlich werden 0,1 Gew.-% bezogen auf die Menge des Acrylat-Polymers ohne Lösemittel von dem Vernetzer Erysis GA 240 zugegeben.

Die erhaltene Mischung wird dann mit einem Streichbalken auf einen PET-Liner, ausgerüstet mit einem trennenden Silikon, ausgestrichen, so dass nach Trocknen bei 110°C eine Schichtdicke von 50 µm entsteht.

Die elektrisch leitfähige Klebemasseschicht C wird folgendermaßen bereitgestellt:
Das Acrylat-Basispolymer wird wie oben für die Klebemasseschicht D beschrieben hergestellt.

Es werden 0,1 Gew.-% bezogen auf die Menge des Acrylat-Polymers ohne Lösemittel von dem Vernetzer Erysis GA 240 zugegeben.

Zu 100 Gew.-% an diesem Acrylat-Basispolymer, bezogen auf die Menge des Polymers ohne Lösemittel, und Vernetzer werden 30 Gew.-% Nickelpartikel gegeben.

Eine Aluminiumfolie mit einer Schichtdicke von 20 µm wird als elektrisch leitfähige Trägerschicht T bereitgestellt.

Die zweite Klebemasseschicht C wird dann mit einem Streichbalken auf die Aluminiumfolie ausgestrichen. Die resultierende Schichtdicke dieser elektrisch leitfähigen Klebemasseschicht C beträgt dann ebenfalls 50 µm.

Anschließend wird die elektrisch ablösbare Klebemasseschicht D auf die Aluminium-Seite des Verbundes aus Trägerschicht T und elektrisch leitfähiger Klebmasseschicht C laminiert, so dass ein Klebeband mit der Schichtanordnung DTC resultiert. Die Gesamtdicke des Klebebandes beträgt 120 µm.

Die Klebkraft auf Stahl des Verbundes ist auf der elektrisch ablösbaren Seite, also auf der freien Fläche der Klebemasseschicht D, 4,5 N/cm, und auf der elektrisch leitenden Seite, also der Schicht C, 5,3 N/cm, wobei die Klebkraft wie oben ausgeführt bestimmt wird.

Zum Test der Ablösefähigkeit wird das Klebeband folgendermaßen verklebt. Die ablösbare Seite des Klebebandes wird auf eine leitfähige Oberfläche in diesem Fall eine Stahlplatte als Stellvertreter für das leitfähige Substrat A geklebt. Auf die gegenüberliegende Seite wird ein Plastikteil aus Polystyrol als Stellvertreter für das Substrat B geklebt, wobei das Plastikteil kleiner ist als die Fläche des Klebebandes bzw. der Klebemasseschicht C, so dass das Klebeband das Plastikteil überragt. Nach der Verklebung wird nun eine Spannung angelegt, und zwar so, dass die Kathode an die Stahlplatte angelegt wird und die Anode an den Überstand bzw. die freie Fläche der elektrisch leitfähigen Klebemasseschicht C.

Die Spannung beträgt dabei 12 V und wird für 60 s angelegt.

Anschließend wird die Probe sofort in die Messapparatur gespannt und erneut die Klebkraft der Klebemasseschicht D des Klebebandes auf der Stahlplatte gemessen. Die Klebkraft beträgt jetzt nur noch 0,7 N/cm.

Durch das Anlegen der Spannung konnte die Klebkraft deutlich reduziert werden.

### Erfindungsgemäßes Beispiel 2

In einem zweiten Beispiel wird die elektrisch ablösbare Klebmasse der Klebemasseschicht D dahingehend geändert, dass das Verhältnis der eingesetzten Acrylate verschoben wird.

Es werden 30 kg 2-Ethylhexylacrylat, 64 kg n-Butylacrylat und 6 kg Acrylsäure eingesetzt. Als ionische Flüssigkeit wird 1-Ethyl-3-methylimidazolium bis(fluorosulfonyl)imide (EMIM-FSI) in einer Menge von 5 Gew.-%, bezogen auf 100 Gew.-% des Acrylat-Polymers ohne Lösemittel, zugegeben.

Ferner werden 4 Gew.-% bezogen auf 100 Gew.-% des Acrylat-Polymers (ohne Lösemittel) an Polypropylenglykol 600, Fa. Sigma Aldrich, zugegeben.

Zusätzlich werden 0,1 Gew.-% bezogen auf die Menge des Acrylat-Polymers ohne Lösemittel von dem Vernetzer Erysis GA 240 zugegeben.

Diese Masse wird mit einer Schichtdicke von 50 µm auf einen silikonisierten Liner ausgestrichen.

Als elektrisch leitfähige Masse der Klebemasseschicht C wird eine Masse auf Basis von Styrolblockcopolymeren eingesetzt.

Es wird als Klebemasse eine Masse aus 33 % Kraton D1118, 17 % Kraton D1102 und 50 % Piccolyte A115 eingesetzt.

Die Masse wird in diesem Fall in einer Mischung aus Benzin und Aceton (3:1) gelöst. Zu 100 Gew.-%, bezogen auf die Gesamtmenge an Polymeren und Klebharz (33 % Kraton D1118, 17 % Kraton D1102 und 50 % Piccolyte A115) ohne Lösemittel, werden 30 Gew.-% Nickelpartikel hinzugegeben.

Die Masse wird mit einer resultierenden Schichtdicke von 50 µm auf eine Aluminiumfolie mit einer Schichtdicke von 20 µm als Trägerschicht T ausgestrichen, wie in Beispiel 1. Anschließend wird die elektrisch ablösbare Schicht D wieder auf die noch freie Seite des Aluminiumträgers laminiert.

Das resultierende Klebeband hat auf der elektrisch ablösbaren Seite eine Klebkraft auf Stahl von 4,2 N/cm und auf der elektrisch leitfähigen Seite von 7,7 N/cm.

Die Verklebung zum Test der Wiederablösbarkeit wird wie oben beschrieben durchgeführt. Nach Anlegen der Spannung von 12 V für 60 s wird wieder die Klebkraft der ablösbaren Seite (Schicht D) auf dem Stahl gemessen, die Klebkraft sinkt auf 0,4 N/cm.

Verwendete Substanzen:
- Kraton D1102:Styrol-Butadien-Styrol-Blockcopolymer mit dem Aufbau A-B-A und A-B im Gemisch, Styrolanteil von 30% und Diblock-Anteil (A-B) von 15 %, der Fa. Kraton
- Kraton D1118:Styrol-Butadien-Styrol-Blockcopolymer mit dem Aufbau A-B-A und A-B im Gemisch, Styrolanteil von 31% und Diblock-Anteil (A-B) von 78 %, der Fa. Kraton
- Klebharz Piccolyte A 115: Terpenharz aus alpha-Pinen, Erweichungspunkt 115°C, der Fa. DRT
- Polyethylenglykol 400, Fa. Sigma Aldrich
- Polypropylenglykol 600, Fa. Sigma Aldrich
- Nickelpartikel, durchschnittliche Partikelgröße 4 µm: T 123, Fa. Vale Canada Ltd
- Erysis^{®} GA 240: Tetraglycidyl-meta-Xylenediamin, Fa. Huntsman

### Bezugszeichenliste

- 1: erste Klebemasseschicht D
- 2: Trägerschicht T
- 3: zweite Klebemasseschicht C
- 3a: freie Fläche der zweiten Klebemasseschicht C
- 4: erstes Substrat A
- 5: zweites Substrat B

## Patentansprüche

1. Klebeband, umfassend wenigstens folgende Schichten:
• Eine erste Klebemasseschicht D, wobei die Klebemasseschicht D wenigstens ein Elektrolyt enthält; und
• Eine zweite Klebemasseschicht C, wobei die Klebemasseschicht C elektrisch leitfähig ist; und
• Eine elektrisch leitfähige Trägerschicht T, die zwischen der ersten Klebemasseschicht D und der zweiten Klebemasseschicht C angeordnet ist; und
• Wobei die Schichten D, T und C bevorzugt so übereinander angeordnet sind, dass keine der Schichten eine der anderen Schichten seitlich überragt.

2. Klebeband nach Anspruch 1, **dadurch gekennzeichnet, dass** der Elektrolyt der Klebemasseschicht D ausgewählt ist aus der Gruppe bestehend aus ionischen Flüssigkeiten und Metallsalzen, wobei ionische Flüssigkeiten besonders bevorzugt sind.

3. Klebeband nach Anspruch 2, **dadurch gekennzeichnet, dass** das Anion der ionischen Flüssigkeit ausgewählt ist aus der Gruppe bestehend aus
Br⁻, AlCl₄⁻, Al₂Cl₇⁻, NO₃⁻, BF₄⁻, PF₆⁻, CH₃COO⁻, CF₃COO⁻, CF₃CO₃⁻, CF₃SO₃⁻, (CF₃SO₂)₂N⁻, (CF₃SO₂)₃C⁻, AsF₆⁻, SbF₆⁻, CF₃(CF₂)₃SO₃⁻, (CF₃CF₂SO₂)₂N⁻, CF₃CF₂CF₂COO⁻, (FSO₂)₂N⁻, und dabei besonders bevorzugt ausgewählt ist aus (CF₃SO₂)₂N⁻ und (FSO₂)₂N⁻,

4. Klebeband nach Anspruch 2 oder 3, **dadurch gekennzeichnet, dass** das Kation der ionischen Flüssigkeit ausgewählt ist aus der Gruppe bestehend aus Kationen auf Imidazolium-Basis, Kationen auf Pyridinium-Basis, Kationen auf Pyrrolidin-Basis und Kationen auf Ammonium-Basis, und dabei besonders bevorzugt ausgewählt ist aus der Gruppe bestehend aus Kationen auf Imidazolium-Basis, wobei das Kation besonders bevorzugt ausgewählt ist aus der Gruppe bestehend aus 1-Ethyl-3-methylimidazolium und 1-Butyl-3-methylimidazolium, wobei das Kation ganz besonders bevorzugt 1-Ethyl-3-methylimidazolium ist.

5. Klebeband nach einem der vorherigen Ansprüche, **dadurch gekennzeichnet, dass** der Elektrolyt der Klebemasseschicht D ausgewählt ist aus der Gruppe bestehend aus den ionischen Flüssigkeiten 1-Ethyl-3-methylimidazolium-bis(trifluormethylsulfonyl)imid (EMIM-TFSI) und 1-Ethyl-3-methylimidazolium bis(fluorsulfonyl)imid (EMIM-FSI).

6. Klebeband nach einem der vorhergehenden Ansprüche, **dadurch gekennzeichnet, dass** die erste Klebemasseschicht D poly(meth)acrylat-basiert ist.

7. Klebeband nach einem der vorhergehenden Ansprüche, **dadurch gekennzeichnet, dass** die erste Klebemasseschicht D 2 bis 10 Gew.-%, bevorzugt 4 bis 6 Gew.-%, an Elektrolyten, bevorzugt ionischen Flüssigkeiten, bezogen auf 100 Gew.-% an enthaltenen Polymeren enthält.

8. Klebeband nach einem der vorherigen Ansprüche, **dadurch gekennzeichnet, dass** die elektrisch leitfähige Trägerschicht T wenigstens ein Metall umfasst, wobei das Metall besonders bevorzugt ausgewählt ist aus der Gruppe bestehend aus Kupfer, Nickel, Zink, Zinn, Silber, Gold, Aluminium, Eisen, Chrom und Legierungen dieser genannten Metalle.

9. Klebeband nach Anspruch 8, **dadurch gekennzeichnet, dass** die elektrisch leitfähige Trägerschicht T a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgedampften Metalls, bevorzugt ausgewählt aus der Gruppe bestehend aus Kupfer und Aluminium, und/oder d) wenigstens ein Gitter aus Metall aufweist.

10. Klebeband nach einem der vorherigen Ansprüche, **dadurch gekennzeichnet, dass** die elektrisch leitfähige Klebemasseschicht C wenigstens ein Metall enthält, wie insbesondere Nickel, Kupfer, Silber, bevorzugt in Form von elektrisch leitfähigen Metallpartikeln und/oder metallisierten Partikeln, wobei die elektrisch leitfähigen Partikel bevorzugt ausgewählt sind aus der Gruppe bestehend aus Nickelpartikeln, Kupferpartikeln und versilberten Kupferpartikeln.

11. Klebeband nach einem der vorherigen Ansprüche, **dadurch gekennzeichnet, dass** die erste Klebemasseschicht D und/oder die zweite Klebemasseschicht C geschäumt ist bzw. sind, wobei die Schäumung bevorzugt mittels Mikroballons hergestellt ist, wobei die Mikroballons an ihrer Oberfläche eine Schicht aus Silikat oder Alumosilikat aufweisen.

12. Verfahren zur Herstellung des Klebebandes nach einem der Ansprüche 1 bis 11, umfassend wenigstens folgende Verfahrensschritte:
a) Bereitstellung einer ersten Klebemasseschicht D, wobei die Klebemasseschicht D wenigstens ein Elektrolyt enthält; und
b) Bereitstellung einer elektrisch leitfähigen Trägerschicht T; und
c) Bereitstellung einer zweiten Klebemasseschicht C, wobei die Klebemasseschicht C elektrisch leitfähig ist,
d) Anordnung der Schichten D, T und C, wodurch ein Schichtverbund DTC als doppelseitiges Klebeband erhalten wird;
e) Optional Formen, insbesondere Stanzen oder Schneiden, des Schichtverbundes DTC.

13. Verklebter Verbund umfassend wenigstens folgende Schichten:
• Ein erstes Substrat A, wobei das Substrat A elektrisch leitfähig ist; und
• Eine erste Klebemasseschicht D, die wenigstens auf einer der Flächen des Substrates A angeordnet ist, wobei die Klebemasseschicht D wenigstens ein Elektrolyt enthält; und
• Eine elektrisch leitfähige Trägerschicht T, die auf der dem Substrat A gegenüberliegenden Fläche der ersten Klebemasseschicht D angeordnet ist; und
• Eine zweite Klebemasseschicht C, wobei die Klebemasseschicht C elektrisch leitfähig ist und auf der der ersten Klebemasseschicht D gegenüberliegenden Fläche der Trägerschicht T angeordnet ist; und
• Ein zweites Substrat B, welches auf der der Trägerschicht T gegenüberliegenden Fläche der zweiten Klebemasseschicht C angeordnet ist,
• Wobei die zweite Klebemasseschicht C das Substrat B in wenigstens einer Erstreckungsrichtung der Schichtebene seitlich überragt, sodass die Klebemasseschicht C eine freie Fläche aufweist, und
wobei die Schichten D, T und C bevorzugt so übereinander angeordnet sind, dass keine der Schichten D, T und C eine der anderen Schichten D, T und C seitlich überragt.

14. Verfahren zum elektrischen Lösen des Verbundes nach Anspruch 13, umfassend wenigstens folgende Verfahrensschritte:
i.) Anlegen einer Spannung zwischen dem leitfähigen Substrat A und der zweiten Klebemasseschicht C, wobei die Spannung bevorzugt 2 bis 20 V, besonders bevorzugt 3 bis 15 V, beträgt.

15. Verwendung des Klebebands gemäß einem der Ansprüche 1 bis 11 zur Verklebung von Bauteilen in elektronischen Geräten, Automobilen, medizinischen Geräten und zahnmedizinischen Geräten.
